# EUROPÄISCHE PATENTSCHRIFT

(11) **EP 2 277 383 B1**
(45) Veröffentlichungstag und Bekanntmachung des Hinweises auf die Patenterteilung: **15.07.2015**
(21) Anmeldenummer: 10007440.0
(22) Anmeldetag: 19.07.2010
(51) Int. Cl.: A22C 15/00

(54) **Vorrichtung und Verfahren zum Aufhängen von Würsten**
Device and method for hanging sausages
Dispositif et procédé de suspension de saucissons

(30) Priorität: 24.07.2009 CH 11762009
(43) Veröffentlichungstag der Anmeldung: 26.01.2011
(73) Patentinhaber: Tipper Tie Alpina GmbH, 9230 Flawil (CH)
(72) Erfinder: Lendenmann, Max, 9500 Wil (CH)
(74) Vertreter: Schalch, Rainer

(56) Entgegenhaltungen:
- EP-A1- 0 107 148
- EP-A1- 1 712 135
- EP-A1- 1 985 185
- DE-U1-202006 019 883

## Beschreibung

### Hintergrund

Die Erfindung betrifft eine Vorrichtung zum maschinellen Aufhängen von jeweils mit einer Hängeschlaufe versehenen Würsten an einer Tragstange, bei welcher Vorrichtung ein Greifmittel für die Hängeschlaufe, eine Fördereinrichtung für die an ihrer Hängeschlaufe hängenden Würste und ein Mittel zum Abladen der geförderten Würste auf die in der Vorrichtung gehaltene Tragstange sowie eine Steuereinrichtung vorgesehen ist. Ferner betrifft die Erfindung eine Anordnung aus einer solchen Vorrichtung und einer Verschliessvorrichtung für Würste sowie ein Verfahren zum Verschliessen von Würsten gemäss Oberbegriff des Anspruchs 5.

### Stand der Technik

Vorrichtungen der genannten Art sind in verschiedenen Ausgestaltungen bekannt, so z.B. aus EP-A 1 891 859, EP-A 1 891 860, EP-A 0 424 675, DE-B 103 40 632 oder US-A 2003/0096568. In der Wurstfertigung ist es vorgesehen während einer Produktionsserie Prüfwürste zu entnehmen, welche dann ausserhalb der Produktionsanordnung aus Verschliessmaschine und Aufhängevorrichtung insbesondere auf die Einhaltung des Füllgewichtes geprüft werden. Dabei wird eine beim Verschliessen der Wurst mit einer Hängeschlaufe versehene Wurst von Hand und durch Zerschneiden der Hängeschlaufe von der Aufhängevorrichtung genommen oder es wird eine Wurst ohne Hängeschlaufe produziert, damit diese nicht auf die Aufhängevorrichtung gelangt. In beiden Fällen ist es nicht sinnvoll möglich, die zur Prüfung entnommene Wurst nach der Prüfung wieder in die Produktionsserie zurück zu geben. Aus EP-A 1 897 446 und DE 20 2006 019 883 U1 ist eine Fertigungslinie für Würste bekannt, welche eine Clipmaschine C mit einer Austragstrecke AS umfasst.

Eine Gleitschiene der Austragstrecke weist eine Fangeinrichtung auf, die bis in den Verschliessbereich der Clipverschliesswerkzeuge der Clipmaschine reicht, wo ein Auffädeln der Hängeschlaufen der Würste auf die Gleitschiene erfolgt. Die Gleitschiene führt die Hängeschlaufe, während die Wurst über ein Förderband der Austragstrecke transportiert wird. Am Ende der Austragstrecke AS hängt die Wurst an ihrer Hängeschlaufe in einer Übergabeposition ÜC an der Gleitschiene der Austragstrecke. Dort wird sie von Förderelementen einer Beschickungsmaschine B mit Haken gegriffen und so übernommen. Es ist an der Beschickungsmaschine B eine Wiegeeinrichtung vorgesehen, welche in den Weg der Förderelemente eingeführt werden kann. Soll eine Wurst gewogen werden, so muss die von den Haken gegriffene Wurst wieder losgelassen und durch das Förderelement an die Wiegeeinrichtung übergeben werden.

### Darstellung der Erfindung

Der Erfindung liegt die Aufgabe zu Grunde, hier eine Vereinfachung zu schaffen.

Dies wird bei der eingangs genannten Vorrichtung dadurch erzielt, dass durch die Steuereinrichtung wahlweise das Greifen einer einzelnen, mit einer Hängeschlaufe versehenen Wurst derart verhinderbar ist, dass die Hängeschlaufe vom Greifmittel nicht aufgenommen wird, wodurch diese Wurst in einen Auslauf der Vorrichtung und nicht in die Fördereinrichtung gelangt.

Es ist damit möglich, dass eine Wurst mit einer Hängeschlaufe produziert wird, welche aber gar nicht erst gegriffen wird und nicht automatisch aufgehängt wird, wie dies mit den mit Hängeschlaufen versehenen Würsten normalerweise geschieht.

Diese Wurst ist nun als Prüfwurst verwendbar. Nach der Prüfung und vorausgesetzt, dass die Wurst eine korrekt gefüllte Wurst ist, kann dann diese Wurst von Hand einfach auf eine Tragstange aufgehängt werden, da sie ja mit einer Hängeschlaufe versehen ist. Die Prüfwurst gelangt somit auf einfache Weise in den Produktionsprozess zurück. Im Gegensatz zu EP-A 1 897 446, wo so vorgegangen wird, dass die Hängeschlaufe einer zu wiegenden Wurst zunächst bei der Clipmaschine ein erstes Mal gegriffen wird, damit die Hängeschlaufe auf die Gleitschiene gelangt und dann von den Haken der Beschickungsmaschine ein zweites Mal gegriffen und dann wieder losgelassen wird, wird bei der vorliegenden Erfindung die zu prüfende bzw. zu wägende Wurst gar nie gegriffen, so dass bereits deren Hängeschlaufe in der Clipmaschine nicht aufgefädelt wird und die Wurst in einen Auslauf gelangt. Dies vereinfacht das Vorgehen und die Prüfwurst liegt direkt am Ausgang der Clipmaschine vor.

Bevorzugt erfolgt die Verhinderung des Greifens der Prüfwurst durch ein mittels der Steuereinrichtung steuerbares Blockiermittel, welches in einer Blockierstellung die Aufnahme der Hängeschlaufe der Wurst auf das Greifmittel blockiert.

Die Erfindung betrifft ferner eine Anordnung aus der erfindungsgemässen Vorrichtung und einer Wurstverschliessmaschine, welche an der Wurst einen Verschlussclip setzt, durch den eine Hängeschlaufe an der Wurst befestigbar ist.

Bei einer bevorzugten Ausführung der Anordnung kann beim Setzen des Verschlussclips durch eine Steuereinrichtung wahlweise eine Hängeschlaufe zur Befestigung zuführbar sein oder das Zuführen eine Hängeschlaufe verhinderbar sein. Damit kann die Anordnung auf einfache Art wahlweise Würste mit Hängeschlaufe erzeugen, die automatisch aufgehängt werden, mit Ausnahme der Prüfwurst, oder Würste ohne Hängeschlaufe, die somit nicht automatisch aufgehängt werden, sondern über den Auslauf ausgegeben werden.

Weiter betrifft die Erfindung ein Verfahren zum Verschliessen von Würsten mit Clipsen, bei welchem beim Verschliessen einer Wurst mittels eines Clips eine Hängeschlaufe an der Wurst befestigbar ist und das maschinelle Aufhängen von jeweils mit einer Hängeschlaufe versehenen Würsten an einer Tragstange erfolgt, indem ein Greifmittel für die Hängeschlaufe, eine Fördereinrichtung für die an ihrer Hängeschlaufe hängenden Würste und ein Mittel zum Abladen der geförderten Würste auf die in der Vorrichtung gehaltene Tragstange sowie eine Steuereinrichtung vorgesehen sind.

Dieses Verfahren soll verbessert werden.

Dies erfolgt dadurch, dass durch die Steuereinrichtung wahlweise das Greifen einer einzelnen, mit einer Hängeschlaufe versehenen Wurst verhindert wird, indem die Hängeschlaufe vom Greifmittel nicht aufgenommen wird, wodurch diese Wurst in einen Auslauf der Vorrichtung und nicht in die Fördereinrichtung gelangt.

Es ergeben sich damit die genannten Vorteile der einfachen, befehlgesteuerten Erzeugung einer Prüfwurst, welche nach der Prüfung wieder in die Produktionsserie zurückführbar ist.

### Kurze Beschreibung der Zeichnungen

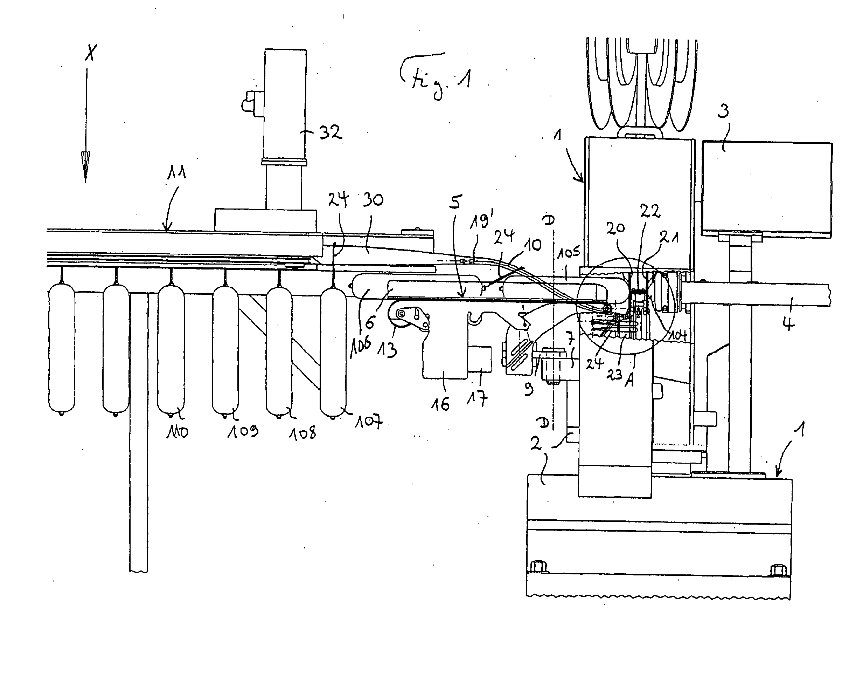

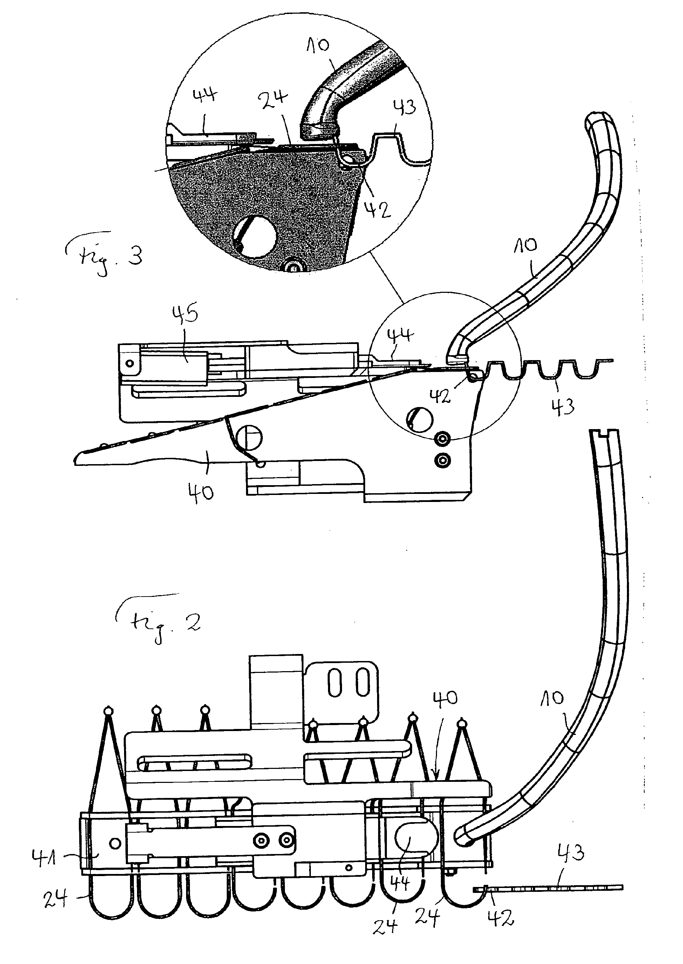

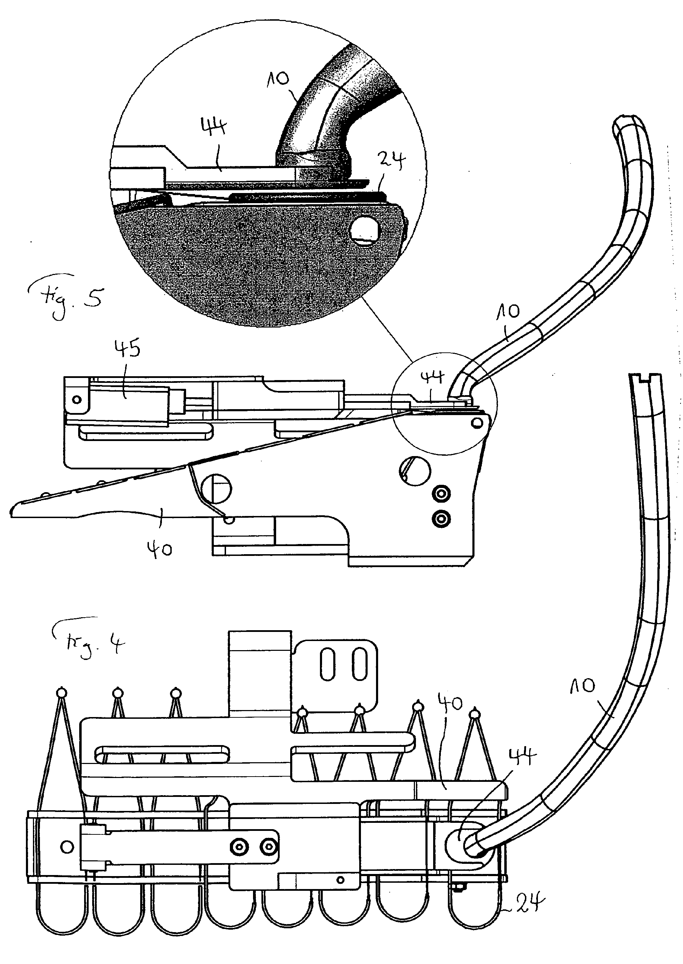

Im Folgenden werden Ausführungsbeispiele der Erfindung an Hand der Zeichnungen näher erläutert. Dabei zeigt Figur 1 eine Seitenansicht auf eine Anordnung aus einer Füll- und Verschliessvorrichtung für Würste und einem Teil einer Aufhängevorrichtung für die Würste; Figur 2 eine Draufsicht auf den Schlaufenzubringer der Verschliessvorrichtung mit dem Schwert der Aufhängevorrichtung; Figur 3 eine Seiten- und Detailansicht der Teile von Figur 2; Figur 4 eine Draufsicht gemäss Figur 2 mit dem aktivierten Blockiermittel zur Verhinderung der Aufnahme der Schlaufe; Figur 5 eine Seiten- und Detailansicht der Teile von Figur 4;

Figur 6 eine Draufsicht auf den Schlaufenzubringer der Verschliessvorrichtung mit dem Schwert der Aufhängevorrichtung bei einer Ausführungsform, bei welcher Würste ohne Hängeschlaufe produziert werden; und

Figur 7 eine Seiten- und Detailansicht des Schlaufenzubringers und des Schwerts der Aufhängevorrichtung einer weiteren Ausführungsform.

### Wege zur Durchführung der Erfindung

Figur 1 zeigt eine Seitenansicht einer Anordnung mit einer Verschliessvorrichtung 1 für Würste und einer Aufhängevorrichtung 11, welche nur teilweise dargestellt ist. Die gezeigte Anordnung ist aus EP-A-1 891 860 bekannt. In der Verschliessvorrichtung werden auf bekannte Weise wurstförmige Verpackungseinheiten bzw. Würste gebildet, indem eine schlauchförmige Verpackung mit dem Füllgut gefüllt, mittels Scherenpaaren gerafft und das Füllgut verdrängt wird und somit ein füllgutfreier Bereich (Zopf) zwischen zwei Verpackungseinheiten geschaffen wird, worauf mittels Verschlussclipsen Anfang und Ende der wurstförmigen Verpackungseinheiten verschlossen werden. Die Verschliessvorrichtung 1 weist ein Maschinengestell 2 und Gehäuseteile auf. An dem Maschinengestell sind auf bekannte Weise Antriebsmittel für den Antrieb der erwähnten Scherenpaare und die Verschliesswerkzeuge vorgesehen sowie für weitere Elemente der Vorrichtung, insbesondere für einen Zubringer für die Hängeschlaufen, von denen jeweils eine am Ende der gefüllten Wurst mit dem Verschlussclip an der Wurst befestigt wird. Ein solcher Schlaufenzubringer ist dem Fachmann bekannt und wird hier nicht im Detail erläutert. Eine Steuerungs- und Bedienungseinheit 3 ist für den Betrieb der Vorrichtung vorgesehen. Auf bekannte Weise erfolgt die Zuführung des zu verpackenden, pastösen, Gutes bzw. des Wurstbräts über ein nur teilweise dargestelltes Füllrohr 4, auf welchem die nicht dargestellte schlauchförmige Verpackungshülle aufgezogen ist. Diese tritt durch eine sogenannte Darmbremse hindurch und wird am freien Füllrohrende in der Verschliessvorrichtung mit dem Gut befüllt, was in der Figur 1 mit dem aus der Darmbremse austretenden einen Ende der Verpackungseinheit bzw. Wurst 104 dargestellt ist. Die Scherenpaare 20 und 21 bilden auf die erläuterte Weise den eingeschnürten Verpackungsbereich 22, in welchem kein Verpackungsgut enthalten ist und an welchem mit dem Werkzeug die Verschlussclips gesetzt werden. Dabei wird auch der Bereich 22 zwischen den Verschlussclips durchtrennt, so dass einzelne Würste entstehen. Unterbleibt dies zwischen zwei oder mehreren Würsten, so entsteht eine Kette aus zwei oder mehreren Würsten. Mit dem Endclip der einen Wurst oder der letzten Wurst einer Kette wird, wie erwähnt, an dieser eine der Hängeschlaufen 24 befestigt. Die Würste werden auf einem Fördermittel 5 aus der Verschliessvorrichtung 1 wegtransportiert. Dabei wird die jeweilige Hängeschlaufe 24 auf den Schwertendteil 10 eines Schwertes 30 der Aufhängevorrichtung 11 aufgezogen, wodurch die das Fördermittel verlassenden Würste mittels der Hängeschlaufen 24 am Schwert hängend aufgereiht werden und mittels einer Transporteinrichtung entlang diesem transportiert werden, was mittels der Würste 107-110 dargestellt ist. Am anderen Ende der Fangvorrichtung 11 werden die Würste von einer Übernahmevorrichtung vom Schwert 30 übernommen und an einen Rauchstab bzw. eine Tragstange abgegeben. Solches ist dem Fachmann bekannt, insbesondere aus EP-A-1 891 859, und wird hier nicht weiter erläutert. Bei dieser Ausführungsform bildet somit der Schwertendteil 10 das Greifmittel für die Hängeschlaufen. Anhand der Figur 1 sowie der Figuren 2 und 3, welche den Hängeschlaufenzubringer in der Verschliessvorrichtung und den Schwertendteil 10 genauer zeigen, wird nun das Aufnehmen der Hängeschlaufen 24 der wurstförmigen Verpackungseinheiten auf das Schwert 30 und insbesondere den Schwertendteil 10, der an der Stelle 19' mit dem weiteren Teil des Schwertes verbunden ist, genauer beschrieben. Die von der Verschliessvorrichtung 1 verschlossenen Verpackungseinheiten mit der endseitig angebrachten Hängeschlaufe werden von dem Fördermittel 5 aus der Verschliessvorrichtung 1 wegtransportiert, das im gezeigten Beispiel als Förderband ausgestaltet ist. Das Fördermittel ist mit der Verschliessvorrichtung und der Aufhängevorrichtung antriebsmässig synchronisiert, sodass die Fördergeschwindigkeit auf die beiden anderen Vorrichtungen abgestimmt ist. Im gezeigten Beispiel ist das Fördermittel 5 an einem Ausleger 7 des Maschinengestells 2 mittels eines Armes 9 befestigt, sodass das Fördermittel Teil der Verschliessvorrichtung 1 ist. Entsprechend wird der Antrieb 16, 17 vorzugsweise von der Steuerung 3 gesteuert. Beidseits des Förderbandes können Leitbleche 6 vorgesehen sein, welche mit dem Band einen Förderkanal für die Würste bilden, wobei in der Darstellung von Figur 1 das in der Figur vordere Leitblech 6 durchsichtig dargestellt ist, sodass die Würste 105 und 106 trotz des Leitbleches erkennbar sind. An das Förderband schliesst ein nicht dargestellter Auslauf an, z.B. eine Rutsche, mit welchem Würste, welche keine Hängeschlaufe besitzen, so dass sie von der Aufhängevorrichtung nicht aufgehängt werden können, in einen nicht dargestellten Behälter abgegeben werden. Die Wurst kann auch von Hand gegriffen werden, wenn sie noch auf dem Förderband liegt, so dass sie vor dem Auslauf entnommen wird.

Die Aufhängevorrichtung greift die mit Hängeschlaufen versehenen Würste und diese werden auf das Schwert 30 geführt, an dem sie mit der Hängeschlaufe hängen und durch ein Fördermittel, insbesondere einen Kettenförderer mit Fördernocken, die an den Hängeschlaufen angreifen, in Richtung auf die Tragstange gefördert werden, auf der die Würste dann aufgehängt werden. Die Aufhängevorrichtung kann dazu angetriebene Greifmittel aufweisen oder passive, fix angeordnete Greifmittel. In der folgenden Schilderung wird von einem passiven Greifmittel ausgegangen, auf welches die Hängeschlaufen beim Verschliessen der Würste durch die Schliesswerkzeuge aufgenommen und dann durch das Fördermittel 5 weiter gezogen werden, bis das Kettenfördermittel am Schwert 30 die Förderung übernimmt.

In den Figuren ist der Verlauf des Schwertendteils 10 des Schwertes 30 gut zu erkennen. Die Seitenansicht der Figuren 1 und 3 und die Draufsicht von Figur 2 zeigt den Schwertendteil 10, wie er von einer seitlichen Lage neben dem Fördermittel 5 sich gekrümmt zum Hängeschlaufenzubringer 40 erstreckt. Die Hängeschlaufen 24 sind auf einem flexiblen bandförmigen Träger 41 voneinander beabstandet und lösbar aufgebracht, welcher Träger vom Hängeschlaufenzubringer angetrieben schrittweise gefördert wird. Die Figuren 2 und 3 zeigen einen Strang 43 von Clipsen, wobei jeweils auf bekannte Weise der vorderste Clip vom Verschliesswerkzeug aufgenommen, vom Strang abgetrennt und zum Verschliessen der Wurst verformt wird, wie dies dem Fachmann bekannt ist. Es ist in den Figuren 2 und 3 ersichtlich, wie der vorderste Clip 42 des Strangs 43 zu der beim Schwertende liegenden Hängeschlaufe 24 positioniert ist. Wird der Clip 42 vom Verschliesswerkzeug der Verschliessvorrichtung 1 aufgenommen, so bewegt er sich in Figur 3 nach oben und nimmt dabei die Hängeschlaufe 24 mit und diese wird einerseits an der Wurst mittels des Clips befestigt und andererseits über das Schwertende und damit auf das Schwert gezogen. Derart werden die Würste nacheinander mit den Hängeschlaufen versehen und auf das Schwert 30 gefördert, wie in Figur 1 ersichtlich.

Gemäss der Erfindung ist nun das Greifen einer Wurst aus der nacheinander gefertigten Folge von Würsten mit Hängeschlaufen verhinderbar; diese Wurst wird nicht gegriffen, während die vorangegangene Wurst gegriffen worden ist und die nachfolgende Wurst wieder gegriffen wird. Diese nicht gegriffene Wurst wird zwar auf die geschilderte Weise mit der Hängeschlaufe 24 versehen, aber die Hängeschlaufe wird vom Greifmittel nicht aufgenommen. Dies erfolgt auf Grund eines Steuerbefehls aus der Steuerung, der durch die Bedienperson manuell ausgelöst werden kann und/oder der in vorgegebenen Abständen durch die Steuerung selber ausgelöst wird. Das Greifen wird je nach Art des Greifmittels der Aufhängevorrichtung auf andere Weise verhindert, die der Fachmann dem Greifmittel anpassen kann. Bei einem aktiven, angetriebenen Greifmittel kann der Antrieb für diese eine Wurst deaktiviert werden, so dass kein aktives Greifen erfolgt. Oder es kann bei einem aktiven oder passiven Greifmittel ein angetriebenes Wegschwenken erfolgen, welches für diese Wurst das Greifen der Hängeschlaufe verhindert, obwohl das Greifmittel selber die Greifbewegung ausführt. Bei einem passiven Greifmittel, wie bisher beschrieben, kann ein Blockiermittel vorgesehen werden, welches das Greifen verhindert. Dies kann an Hand der Figuren 4 und 5 genauer erläutert werden. Diese Figuren zeigen wiederum den Hängeschlaufenzubringer und das Schwertende, wie die Figuren 2 und 3 und es werden für dieselben Elemente dieselben Bezugszeichen verwendet. Ein Blockiermittel 44 ist in diesem Beispiel in Form eines angetrieben verschiebbaren Schiebers 44 mit dem Antrieb 45 vorgesehen. In den Figuren 2 und 3 ist dieser Schieber in seiner zurückgefahrenen Stellung gezeigt, in welcher er das Aufnehmen der Hängeschlaufe auf das Schwertende 10 nicht blockiert. In den Figuren 4 und 5 ist dagegen ersichtlich, wie das Blockiermittel 44 nach vorne gefahren ist und das freie Ende des Schwerts abdeckt. Damit kann die vorderste Hängeschlaufe zwar vom Clip des Clipstrangs aufgenommen werden und wird damit an der Wurst befestigt, es wird aber verhindert, dass die Hängeschlaufe auf das Schwert gelangt und somit kann die Aufhängevorrichtung 11 diese Wurst nicht greifen. Diese Wurst mit Hängeschlaufe gelangt somit nach dem Fördermittel 5 auf die erwähnte Rutsche und in den Auffangbehälter. Aus diesem kann sie von der Bedienungsperson entnommen und zur Prüfung gegeben werden. Nach der Prüfung, welche im Wesentlichen eine Wägung ist, kann dann die Wurst von Hand auf einen der automatisch beladenen Rauchstecken bzw. auf eine der Tragstangen aufgehängt werden, da ja die Wurst mit einer intakten Hängeschlaufe versehen ist. Das Blockiermittel 44 ist nach dem Verschliessen der "Prüfwurst" durch die Steuerung wieder zurück gefahren worden, so dass die auf diese Wurst folgende Wurst wieder mit ihrer Hängeschlaufe auf das Schwert 10 aufgenommen worden ist.

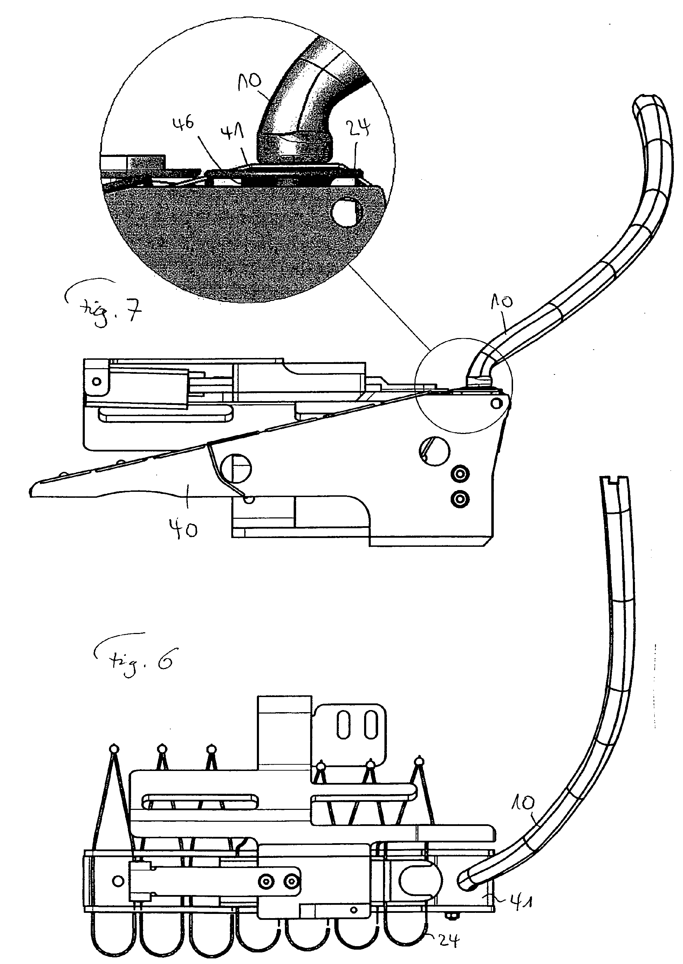

Figur 6 zeigt eine bevorzugte Ausführungsform. Dabei bezeichnen gleiche Bezugszeichen wiederum gleiche Elemente. Bei dieser Ausführungsform ist vorgesehen, dass die Steuerung den Vorschub der Hängeschlaufen unterbrechen kann, wenn ihr von der Bedienungsperson ein entsprechender Befehl gegeben wird. In diesem Fall wird an den nacheinander hergestellten Würsten keine Hängeschlaufe befestigt und diese gelangen alle über das Fördermittel 5 und die Rutsche in den Auffangbehälter oder können von der Bedienungsperson vom Fördermittel von Hand weggenommen werden. Dies erlaubt die einfache Umstellung der Herstellung von Würsten mit Hängeschlaufe zur Herstellung von Würsten ohne Hängeschlaufen und umgekehrt.

Figur 7 zeigt eine weitere Ausführungsform, bei welcher wiederum gleiche Bezugsziffern gleiche Elemente bezeichnen. In dieser Ausführung ist unterhalb des bandförmigen Trägers und gegenüberliegend zu dem freien Ende des Schwerts 10 ein angetrieben auf dieses Ende hin verfahrbarer und zurückfahrbarer Stössel 46 vorgesehen. Dessen Antrieb kann insbesondere pneumatisch erfolgen. Dieser Stössel 46 wird bei jeder aufzuhängenden Wurst auf das Schwertende zu ausgefahren und bringt den bandförmigen Träger dabei zum Anliegen an das Ende des Schwerts. Damit wird sichergestellt, dass die Hängeschlaufe auf das Schwert gelangt. Danach wird der Stössel wieder nach unten verfahren, um den bandförmigen Träger für den Vorschub frei zu geben, mit dem die folgende Hängeschlaufe in Position gebracht wird.

## Patentansprüche

1. Vorrichtung (11) zum maschinellen Aufhängen von jeweils mit einer Hängeschlaufe (24) versehenen Würsten (104-110) an einer Tragstange, bei welcher Vorrichtung ein Greifmittel (10) für die Hängeschlaufe, eine Fördereinrichtung (30) für die an ihrer Hängeschlaufe hängenden Würste und ein Mittel zum Abladen der geförderten Würste auf die in der Vorrichtung gehaltene Tragstange sowie eine Steuereinrichtung (3) vorgesehen ist, **dadurch gekennzeichnet, dass** durch die Steuereinrichtung wahlweise das Greifen einer einzelnen, mit einer Hängeschlaufe versehenen Wurst derart verhinderbar ist, dass die Hängeschlaufe vom Greifmittel (10) nicht aufgenommen wird, wodurch diese Wurst in einen Auslauf der Vorrichtung und nicht in die Fördereinrichtung gelangt.

2. Vorrichtung nach Anspruch 1, **dadurch gekennzeichnet, dass** ein durch die Steuereinrichtung steuerbares Blockiermittel (44, 45) vorgesehen ist, welches in einer Blockierstellung die Aufnahme der Hängeschlaufe der Wurst auf das Greifmittel (10) blockiert.

3. Anordnung aus einer Vorrichtung nach Anspruch 1 oder 2 und einer Verschliessvorrichtung (1) für Würste, welche an der Wurst einen Verschlussclip setzt, wodurch eine Hängeschlaufe an der Wurst befestigbar ist.

4. Anordnung nach Anspruch 3, **dadurch gekennzeichnet, dass** beim Setzen des Verschlussclips durch eine Steuereinrichtung wahlweise eine Hängeschlaufe zur Befestigung zuführbar ist oder das Zuführen eine Hängeschlaufe verhinderbar ist.

5. Verfahren zum Verschliessen von Würsten mit Clipsen, bei welchem beim Verschliessen einer Wurst mittels eines Clips (42) eine Hängeschlaufe (24) an der Wurst befestigbar ist und das maschinelle Aufhängen von jeweils mit einer Hängeschlaufe (24) versehenen Würsten (104-110) an einer Tragstange erfolgt, indem ein Greifmittel (10) für die Hängeschlaufe, eine Fördereinrichtung (30) für die an ihrer Hängeschlaufe hängenden Würste und ein Mittel zum Abladen der geförderten Würste auf die in der Vorrichtung gehaltene Tragstange sowie eine Steuereinrichtung (3) vorgesehen sind, **dadurch gekennzeichnet, dass** durch die Steuereinrichtung wahlweise das Greifen einer einzelnen, mit einer Hängeschlaufe versehenen Wurst verhindert wird, indem die Hängeschlaufe vom Greifmittel nicht aufgenommen wird, wodurch diese Wurst in einen Auslauf der Vorrichtung und nicht in die Fördereinrichtung gelangt.

## Claims

1. Device (11) for automatically hanging sausages (104-110), each having a hanger loop (24), on a carrying bar, a gripping means (10) for the hanger loop, a transport device (30) for the sausages hanging by their hanger loop and a means for discharging the transported sausages onto the carrying bar supported in the device as well as a controlling device (3) being provided in the device, **characterized in that** optionally gripping a single sausage provided with a hanger loop is avoided is such a way that the hanger loop is not taken over by the gripping means (10), such that this sausage gets into a discharge of the device and not into the transport device.

2. Device according to claim 1, **characterized in that** a blocking means (44, 45), controllable by the controlling device, is provided, blocking the reception of the hanger loop of the sausage on the gripping means (10) in a blocking position.

3. Arrangement with a device according to claim 1 or 2 and a sealing device (1) for sausages, which applies a sealing clip to the sausage, such that a hanger loop is attachable to the sausage.

4. Arrangement according to claim 3, **characterized in that** during application of the sealing clip optionally a hanger loop for attachment can be supplied or the supply of a hanger loop is inhibited.

5. Method for sealing sausages with clips, in case of which during sealing of a sausage by means of a clip (42) a hanger loop (24) is attached to the sausage and the automatic hanging of sausages (104-110), each having a hanger loop (24), is done on a carrying bar by providing a gripping means (10) for the hanger loop, a transport device (30) for the sausages hanging by their hanger loop and a means for discharging the transported sausages onto the carrying bar supported in the device as well as a controlling device (3), **characterized in that** optionally gripping a single sausage provided with a hanger loop is avoided is such a way that the hanger loop is not taken over by the gripping means, such that this sausage gets into a discharge of the device and not into the transport device.

## Revendications

1. Dispositif (11) pour automatiquement suspendre des saucissons (104-110), chacun ayant une boucle de suspension (24), à une barre de support, un moyen de préhension (10) pour la boucle de suspension, un dispositif de transport (30) pour les saucissons suspendus par leur boucle de suspension et un moyen pour décharger les saucissons transportés sur la barre de support tenue dans le dispositif, et un dispositif de commande (3) étant prévus dans le dispositif, **caractérisé en ce qu'**optionnellement la prise d'un seul saucisson ayant une boucle de suspension est évité de sorte que la boucle de suspension n'est pas prise par le moyen de préhension (10), de sorte que ce saucisson arrive dans une décharge du dispositif et pas dans le dispositif de transport.

2. Dispositif selon la revendication 1, **caractérisé en ce qu'**un moyen de blocage (44, 45), commandé par le dispositif de commande, est prévu, qui bloque la réception de la boucle de suspension du saucisson sur le moyen de préhension (10) dans une position de blocage.

3. Arrangement avec un dispositif selon la revendication 1 ou 2, et un dispositif de scellage (1) pour des saucissons, qui applique une agrafe de scellage au saucisson, de sorte qu'une boucle de suspension est attachable au saucisson.

4. Arrangement selon la revendication 3, **caractérisé en ce que** pendant l'application de l'agrafe de scellage optionnellement une boucle de suspension pour l'attachement peut être fournie ou la fourniture d'une boucle de suspension est évitée.

5. Procédé pour sceller des saucissons avec des agrafes, dans le cas duquel, pendant le scellage d'un saucisson à l'aide d'une agrafe (42), une boucle de suspension (24) est attachée au saucisson et la suspension automatique des saucissons (104-110), chaque ayant une boucle de suspension (24), est effectuée sur une barre de support en prévoyant un moyen de préhension (10) pour la boucle de suspension, un dispositif de transport (30) pour les saucissons suspendus par leur boucle de suspension et un moyen pour décharger les saucissons transportés sur la barre de support tenue dans le dispositif, et un dispositif de commande (3), **caractérisé en ce qu'**optionnellement la prise d'un seul saucisson ayant une boucle de suspension est évité de sorte que la boucle de suspension n'est pas prise par le moyen de préhension (10), de sorte que ce saucisson arrive dans une décharge du dispositif et pas dans le dispositif de transport.
